(19) 
**Europäisches Patentamt**
**European Patent Office**
**Office européen des brevets**

(11) **EP 2 436 649 A2**

(12) **EUROPEAN PATENT APPLICATION**

(43) Date of publication:
**04.04.2012 Bulletin 2012/14**

(51) Int Cl.:
*C01G 1/02* *(2006.01)* *C01G 23/07* *(2006.01)*

(21) Application number: **11176235.7**

(22) Date of filing: **02.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.08.2010 IN MU22462010**

(71) Applicant: **Tata Consultancy Services Ltd.**
**Mumbai 400 021, Maharashtra (IN)**

(72) Inventors:
• **Runkana, Venkataramana**
**411013 Pune (IN)**
• **Buddhiraju, Venkata Sudheendra**
**411013 Pune (IN)**

(74) Representative: **Meissner, Bolte & Partner**
**Anwaltssozietät GbR**
**Widenmayerstrasse 48**
**80538 München (DE)**

(54) **System for optimizing and controlling particle size distribution and production of nanoparticles in furnance reactor**

(57) The present invention relates to a system for optimizing and controlling the particle size distribution and production of nanoparticles in a furnace reactor. The method provides nanoparticles with desired, optimized and controlled particle size distribution and specific surface area in furnace reactors using a simulation tool with programmed instructions. The said simulation tool couples flame dynamics module and particle population balance module and precursor reaction kinetics module.

FIGURE 1

EP 2 436 649 A2

**Description**

**FIELD OF THE INVENTION:**

The present invention relates to a system for optimizing particle size distribution and production of nanoparticles in furnace reactors. More particularly the present invention relates to a system and method for production of nanoparticles with desired particle characteristics.

**BACKGROUND OF THE INVENTION AND PRIOR ART:**

In the recent years, nanotechnology has gained importance and has become one of the research focus areas for its fundamental and practical applications. Fine particles are usually produced in furnace reactors on the industrial scale with annual production of several metric tons per hour. The smaller size of the particles especially less than 100 nm is one of the key parameters that is responsible for various properties such as electronic, electric, optical, magnetic chemical and mechanical properties that make nanoparticles suitable for several applications in the fields of ceramics, catalysis, coatings, electronics, chemical and mechanical polishing, data storage, fuel cells, etc.

Many commodity and specialty chemicals and materials such as carbon black, titania, silica and zinc oxide are produced in the form of fine particles, which find applications in a wide variety of industrial and domestic products ranging from tyres, printing inks, paints and pigments, plastics, optical fibers, catalysts, pharmaceutical powders and cosmetics.

For many practical applications, it is desirable to have particles of small size as well as of narrow size distribution because smaller particles with narrow size distribution result in better properties of finished products. For example, activity of catalysts, hardness and strength of metals, electrical conductivity of ceramics improve as the particle size decreases.

These special properties of the nanoparticles can vary markedly from those of the analogous bulk materials. The physical and chemical properties of the nanomaterials tend to be exceptionally dependent on their size and shape or morphology. As a result, scientists are focusing their efforts on developing simple and effective methods for fabricating nanomaterials with controlled size and morphology and hence, improving their properties. One of the techniques for producing fine particles on the large scale is flame aerosol synthesis in horizontal or vertical furnace reactors, with annual production volume of several million metric tons and particle production rates up to 25 metric tons per hour. Typically, in the furnace reactor, the fine particles are produced by

  a. Heating the gas in a furnace reactor;
  b. Passing the heated gas through a cooling zone before it exits the reactor;
  c. Formation of particles by homogeneous nucleation and growth by coagulation and coalescence;
  d. Dilution of the carrier gas followed by quenching of the diluted carrier gas near the outlet of the reactor to prevent sintering of the particles;
  e. Lowering the temperature in the downstream of the reactor to enhance the formation of smaller product particles as the sintering of agglomerated particles is prevented.

As the temperature decreases, particle growth takes place mainly by coagulation and results in irregularly structured particles and particle size distribution.

Though the process for production of fine particles is well established, the challenging task is to control the product particle size and particle size distribution in furnace reactors for large scale production.

The product particle size distribution is influenced by several factors, namely, burner geometry, nature of flame and its configuration, inlet reactant flow rate and its concentration, and turbulence characteristics, gas and particle velocities, pressure and temperature profiles and residence time distribution inside the reactor.

In order to control the product particle size and particle size distribution in furnace reactors for large scale production, the design of the reactors and the process are optimized commonly by employing heuristics developed based on the experience of process design engineers and plant operators on trial and error basis, which may or may not result in desirable product characteristics.

Some of the inventions which deal to provide system, method and scale-up process for synthesis of nano-particles are as follows:

  US 20060024435 discloses a method for producing nano-sized particles and a nanoparticle reactor which comprises a nucleation and core growth region providing a laminar flow of reactants in which the reactants thermally decompose to produce a supersaturated vapor that nucleates aerosol particles into particle cores. Though the '435 patent application discloses a method and apparatus for production of nanoparticles, it fails to disclose a method to configure the streams of the reactor without experimentation. Further, it does not determine the influence of process parameters on particle size distribution.

US 20060159596 disclose a method and apparatus for the controlled synthesis of nanoparticles using a high temperature process. The reactor chamber includes a high temperature gas heated by means such as a plasma torch, and a reaction chamber. Though the '596 patent application discloses a method and apparatus for the controlled synthesis of nanoparticles, it fails to disclose a method to configure the streams of the reactor without experimentation. Further, it does not determine the influence of process parameters on particle size distribution.

"Vapor Synthesis of Titania Powder by Titanium Tetrachloride Oxidation" by Akhtar et al (1991) discloses chemical reaction and coagulation to determine the characteristics of the product Titania particle size distribution in an aerosol flame reactor. Further, the said article discloses the production method of $TiO_2$ particles by the vapor-phase oxidation of $TiCl_4$ and the effect of process variables on the production method by solving the aerosol dynamic reactions for "chemical reaction and coagulation" by a sectional technique. This work was focused mainly on the size distribution of particles only and did not address the coupling of the gas phase dynamics with particle population dynamics. Further, the said article does not determine the gas phase and particle characteristics throughout the furnace reactor and the particle characteristics using various burners. It also does not address the challenging aspects for the scale-up of production of nanoparticles with the desired particle size distribution.

In light of the above mentioned prior arts it is evident that there is a need to have a customizable solution for production of nanoparticles on the large scale with desired particle characteristics such as particle size, shape and particle size distribution with cost effective systems and process and less experimentation.

In the present invention we propose a novel approach for production of nanoparticles with desired particle characteristics to overcome the above mentioned limitations for production of nanoparticles on large scale.

In order to address the long felt need for such a solution, the present invention provides a system and method for production of nanoparticles in furnace reactors.

## OBJECTS OF THE INVENTION:

The principle object of the invention is to produce nanoparticles in furnace reactors.

Further object of the invention is to provide a method and a system for production of nanoparticles with desired particle characteristics.

Yet another object of the invention is to provide a simulation tool for production of nanoparticles with controlled properties in a furnace reactor.

Yet another object of the invention is to provide a system for production of nanoparticles cost effectively requiring less experimentation and utilizing less time.

Yet another object of this invention is to provide a system for production of nanoparticles which determines the influence of process parameters such as but not limited to temperature, pressure, and input material characteristics on particle size distribution.

## SUMMARY OF THE INVENTION:

The present invention discloses a system and method for optimizing and controlling particle size distribution and production of nanoparticles in furnace reactors.

The method and system of the present invention provides nanoparticles with desired particle characteristics.

The present invention provides a simulation tool for production of nanoparticles with controlled properties cost effectively requiring less experimentation and utilizing less time.

A method for simulating the production of nanoparticles in a furnace reactor comprises of:

a) Determining

i) the operating data for physical process parameters from the said process instruments integrated with the furnace reactor;
ii) the mixing characteristics of the precursor or reactant at a particular concentration and the stream input fed to the burner of the said furnace reactor;
iii) the data for burner configuration and the design of the reactor;

b) Feeding the determined data of step a) to the flame dynamics module of the simulation tool with the programmed instructions to obtain the flame temperature and different species mass-fractions throughout said furnace reactor;
c) Transmitting the determined data of step a) and b) to the numerical solver by the flame dynamics module of the said simulation tool for providing inputs to the particle population balance model;

d) Transmitting the flame dynamics results from step c) to particle population balance module and the precursor reaction kinetics module (to estimate the rate kinetics of the precursor oxidation reaction simultaneously) coupled to the said particle population balance module of the said simulation tool to determine the particle size distribution of the evolved nanoparticles.

e) Obtaining the output as product particle size distribution and specific surface area of the product powder from the simulation tool with the programmed instructions to optimize and control the particle size distribution and nanoparticle production in a furnace reactor integrated with the process instruments.

## BRIEF DESCRIPTION OF THE DRAWINGS:

The foregoing summary, as well as the following detailed description of preferred embodiments, is better understood when read in conjunction with the appended drawings. For the purpose of illustrating the invention, there is shown in the drawings example constructions of the invention; however, the invention is not limited to the specific methods disclosed. In the drawings:

Figure 1 of the present invention illustrates the structure of the simulation tool with programmed instructions for production of nanoparticles in a furnace reactor.

Figure 2 illustrates the typical electrically heated furnace reactor configuration as described by Akhtar et al (Akhtar, M.K., Xiong, Y. and Pratsinis, S.E., 1991, "Vapor Synthesis of Titania Powder by Titanium Tetrachloride Oxidation", AIChE J., 37, 1561-1570).

Figure 3 illustrates simulated temperature profile in the furnace reactor.

Figure 4 illustrates the comparison of axial temperature profile in a furnace reactor predicted by simulation tool of the present invention with experimental data of Akhtar et al (Akhtar, M.K., Xiong, Y. and Pratsinis, S.E., 1991, "Vapor Synthesis of Titania Powder by Titanium Tetrachloride Oxidation", AIChE J., 37, 1561-1570).

Figure 5 illustrates the comparison of titanium dioxide particle size distribution curves obtained with a precursor ($TiCl_4$) concentration of $1.16 \times 10^{-5}$ mol/l at a furnace temperature of 1723 K predicted by simulation tool of the present invention with experimental data of Akhtar et al (Akhtar, M.K., Xiong, Y. and Pratsinis, S.E., 1991, "Vapor Synthesis of Titania Powder by Titanium Tetrachloride Oxidation", AIChE J., 37, 1561-1570).

Figure 6 illustrates the comparison of titanium dioxide particle size distribution curves at a precursor ($TiCl_4$) concentration of $1.56 \times 10^{-5}$ mol/l at a furnace temperature of 1400 K predicted by simulation tool of the present invention with experimental data of Akhtar et al (Akhtar, M.K., Xiong, Y. and Pratsinis, S.E., 1991, "Vapor Synthesis of Titania Powder by Titanium Tetrachloride Oxidation", AIChE J., 37, 1561-1570).

## DETAILED DESCRIPTION OF THE INVENTION:

Before the present method and system enablement are described, it is to be understood that this invention is not limited to the particular methodologies, and apparatus described, as these may vary. It is also to be understood that the terminology used in the description is for the purpose of describing the particular versions or embodiments only, and is not intended to limit the scope of the present invention which will be limited only by the appended claims. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. The disclosed embodiments are merely exemplary of the invention, which may be embodied in various forms.

In one of the significant embodiments the present invention provides a system for production of nanoparticles in furnace reactors. A system for optimizing and controlling particle size distribution and production of nanoparticles in a furnace reactor comprising of:

a furnace reactor integrated with process instruments; wherein the said reactor further comprises of:

at least one burner;
at least one precursor or reactant;
at least one stream input with at least one precursor or reactant;
optionally an electric heater

a simulation tool with programmed instructions to cause the processor to couple flame dynamics module, numerical solver and particle population balance module in order to optimize and control the particle size distribution and production of nanoparticles in the furnace reactor.

According to another embodiment of the present invention, the system for optimizing and controlling the particle size distribution of nanoparticles in a furnace reactor optionally consists of an electrical heater along with provision for entry and exit of the coolant.

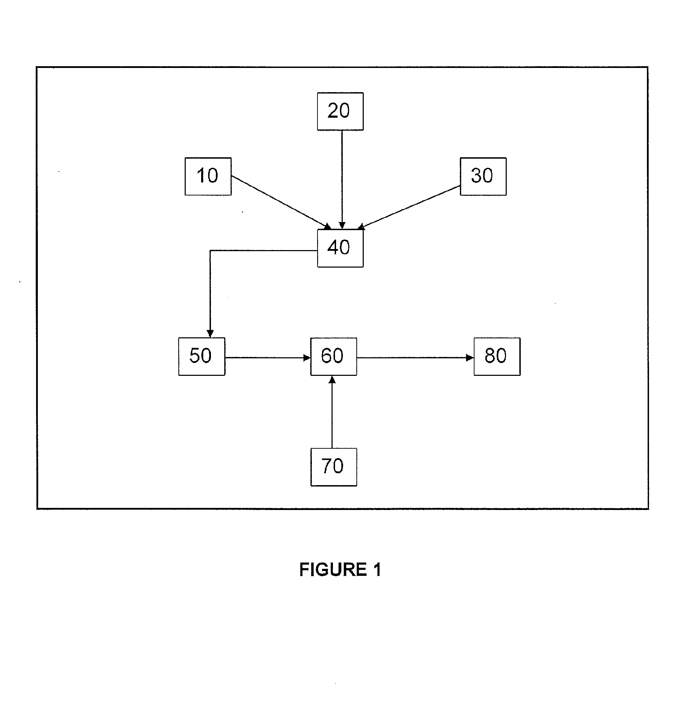

Figure 1 of the present invention illustrates the flowchart for simulation tool with programmed instructions for production of nanoparticles in furnace reactor.

In a preferred embodiment of the present invention the furnace reactor may be a premixed flame or a diffusion flame or an electrically heated reactor integrated with the process instruments.

According to one of the embodiments of the present invention, the simulation tool comprises of the following components:

1. Flame dynamic module (40) coupled to fuel combustion module;
2. numerical solver (50);
3. Particle population module (60) coupled to precursor reaction kinetics module (70).

According to one of the embodiments of the present invention, the simulation tool couples flame dynamics module (40) and particle population balance module (60) to optimize and control the particle size distribution and scale-up of the production of nanoparticle with the desired characteristics.

According to one of the embodiments of the present invention, the process instruments comprises of precursor flow rate gauze, precursor pressure gauze, air flow rate gauze, air pressure gauze, carrier gas flow rate gauze, carrier gas pressure gauze, temperature sensors, and coolant flow rate gauze.

The process instruments integrated with the furnace reactor provide the operating data for variables such as precursor flow rate, precursor pressure, air flow rate, air pressure, carrier gas flow rate, carrier gas pressure, coolant flow rate to manage the process.

Further, the Flame dynamics module (40) receives input in the form of operating data from operating conditions module (10) such as but not limited to precursor flow rate, precursor pressure, air flow rate, air pressure, carrier gas flow rate, carrier gas pressure, and coolant flow rate and manages the operating data obtained from the various process instruments of the flame aerosol reactor through the operating conditions module (10).

Further, the Flame dynamics module(40) receives input for burner geometry with respect to but not limited to number of tubes in the burner, the spacing between each tube, diameter of the tubes from reactor geometry module (20).

Flame dynamics module(40) coupled to the simulation tool with programmed instructions determines the flame temperature and different species mass-fractions throughout the furnace reactor and further simulates and determines the physical process parameters (30) such as but not limited to fluid velocity and pressure.

Further, the Flame dynamics module (40) is coupled with the numerical solver (50) for managing operating data obtained from the various process instruments of the furnace reactor.

According to one of the embodiments of the present invention, the steps involved for simulating the production of nanoparticles in a furnace reactor comprises of:

a) Feeding operating data variables, geometry of the reactor and physical constants and material properties to the flame module;
b) Transmitting the operating data obtained from the various process instruments of the furnace reactor to numerical solver by the flame module.
c) Determining the flame temperature and different species mass-reaction and physical process parameters on entering the transmitted operating data variables of step b);
d) Managing operating data obtained by the numerical solver from the flame module.
e) Transmitting the managed operating data variables of step d) to particle population balance module coupled with precursor kinetic reaction model to predict the evolution of complete particle size distribution.

The governing equations for the flame dynamics module (40) are as follows:

The equation of motion according to Bird et al., (2002)

$$\frac{\partial}{\partial t}(\rho u) = -[\nabla . \rho u u] - \nabla p - [\nabla . \tau] - [\nabla . \tau^{(t)}] + \rho g \tag{1}$$

wherein $\rho$ is gas density (kg/m$^3$), $u$ is velocity (m/s), $T^{(t)}$ is turbulent momentum flux tensor (kg/s$^2$/m), $\tau$ is stress tensor (kg/s$^2$/m) and $g$ is gravitational acceleration (m/s$^2$).

Further, according to Launder and Spalding (1974), the $k$-$\varepsilon$ model is used for calculating the turbulent kinetic energy, $k$(m$^2$/s$^2$) and its dissipation rate, $\varepsilon$ (m$^2$/s$^3$)

$$\frac{\partial}{\partial t}(\rho k) + \nabla.(\rho u k) = \nabla.\left[\left(\mu + \frac{\mu_t}{\sigma_k}\right)\nabla k\right] + P_k - \rho\varepsilon \qquad (2)$$

$$\frac{\partial}{\partial t}(\rho\varepsilon) + \nabla.(\rho u \varepsilon) = \nabla.\left[\left(\mu + \frac{\mu_t}{\sigma_k}\right)\nabla\varepsilon\right] + \frac{\varepsilon}{k}\left(C_{\varepsilon 1}P_k - C_{\varepsilon 2}\rho\varepsilon\right) \qquad (3)$$

where $P_k$ is turbulence production due to viscous and buoyancy forces (kg/s$^3$) which is obtained using the following equation:

$$P_k = \mu_t \nabla u.(\nabla u + \nabla u^T) - \frac{2}{3}\nabla.u\left(3\mu_t\nabla.u + \rho k\right) + P_{kb} \qquad (4)$$

where $\mu_t$ is turbulent viscosity (kg/m/s) given by $\dfrac{\rho C_\mu k^2}{\varepsilon}$ and $P_{kb}$ is turbulence production due to buoyancy forces (kg/s$^3$).

The continuity equation for component i given by (CFX 11.0 User's Manual):

$$\nabla.(\rho\vec{v}Y_i) = -\nabla.\vec{J}_i + R_i + S_i \qquad (5)$$

where $R_i$ is the net rate of production of species i by a chemical reaction, $S_i$ is the rate of creation of species i by addition from the dispersed phase, $Y_i$ is mass fraction of component $i$ and $J_i$ is diffusion flux of species i, which arises due to concentration gradients.

The equation of energy in terms of the specific enthalpy h (J/kg) is given by (CFX 11.0 User's Manual):

$$\frac{\partial}{\partial t}(\rho h) + \nabla.\rho h u = \nabla.(k_g\nabla T) + \frac{\partial p}{\partial t} + u.\nabla p + \tau:\nabla u + S_E \qquad (6)$$

where $k_g$ is thermal conductivity of the gas (J/m/s/K), $S_E$ is source term that denotes the rate of heat liberated due to chemical reaction and heat absorption due to radiation. $\tau:\nabla u$ is always negative and is called the viscous dissipation.

The P-1 radiation model according to Siegel and Howell (1992) is incorporated in the enthalpy balance to account for radiant energy absorption and irradiation. The radiation flux is expressed by expanding the radiation intensity in series of orthogonal harmonics in this model. The radiation flux is then directly incorporated into the enthalpy balance to account for the radiation heat transfer process.

As mentioned earlier, the furnace reactor may have an electrical heater or an input steam of fuel such as methane to provide energy required for the process. In the case of fuel being used, instead of an electrical heater, the rate of fuel combustion is calculated using the eddy-dissipation model (EDM) proposed by Magnussen and Hjertager, it is assumed that the chemical reaction is fast relative to the transport processes. The EDM consists of two rate expressions, Equations 7 and 8 given below. Equation 7 represents the reaction rate $R_1$ (kmol/m$^3$/s) that accounts for the mixing of the reactants in the turbulent eddies.

$$R_1 = A_{EDM} \frac{\varepsilon}{k} \min\left(\frac{[I]}{v_I}\right) \tag{7}$$

where $[I]$ (kmol/m$^3$) is concentration of the reactant $I$, $v_I$ is the stoichiometric coefficient of component $I$ and $A_{EDM}$ is a numerical constant.

Equation 8 represents the reaction rate $R_2$ (kmol/m$^3$/s) that accounts for the mixing of the hot product gases with the cold reactant gases when heat transport to the unreacted gases is the limiting factor.

$$R_2 = A_{EDM} \, B_{EDM} \frac{\varepsilon}{k} \left( \frac{\sum_P [I] W_I}{\sum_P v_I W_I} \right) \tag{8}$$

Where, P loops over all product components in the reaction. In Eq.8, $W_1$ (kg/kgmol) is molar mass of the component $i$ and $B_{EDM}$ is a numerical constant. The rate of combustion is determined by the smaller of the two rates $R_1$ and $R_2$.

Particle population balance module (60) coupled to the simulation tool with programmed instructions determines the complete particle size distribution by solving aerosol dynamic equations by a sectional method.

The governing equations for particle population balance module (60) are as follows:

The rate of change of monomer or primary particle concentration in the first section $N_1$ is:

$$\frac{dN_1}{dt} = I - \left\{ N_1 \sum_{j=1}^{max} \alpha_{1,j} \, \beta_{1,j} \, N_j \right\} \rho_g \tag{9}$$

where $\rho_g$ is gas density.

The discredited and geometrically sectioned population balance equation (PBE) proposed by Hounslow et al. (1988) has been employed here for modeling aggregate growth by coagulation.

The rate of change of particle or aggregate concentration due to aggregation alone is given by: (Hounslow et al., 1988)

$$\frac{dN_i}{dt} = \left\{ N_{i-1} \sum_{j=1}^{i-2} 2^{j-i+1} \alpha_{i-1,j} \, \beta_{i-1,j} \, N_j + \frac{1}{2} \alpha_{i-1,i-1} \, \beta_{i-1,i-1} \, N_{i-1}^2 - N_i \sum_{j=1}^{i-1} 2^{j-i} \alpha_{i,j} \, \beta_{i,j} \, N_j - N_i \sum_{j=i}^{max} \alpha_{i,j} \, \beta_{i,j} \, N_j \right\} \rho_g \tag{10}$$

where $N_i$ is number concentration of particles or aggregates in section i per unit mass of gas. The collision efficiency factor $\alpha$ is a function of interaction forces between particles, but is assumed unity in the present work. The first term on right hand side accounts for growth due to aggregation of clusters that belong to the smaller sections, except the immediately adjacent smaller section, which is taken into account in the second term. The third term describes loss of aggregates due to their interaction with entities belonging to smaller sections and the fourth term represents loss of aggregates due to mutual aggregation and interactions with aggregates belonging to larger sections.

The Fuchs' interpolation function for Brownian coagulation in the free molecular and continuum regimes is used here to estimate coagulation rate constant (Seinfeld, 1986):

$$\beta_{i,j} = 2\pi \left(D_i + D_j\right)\left(d_{c_i} + d_{c_j}\right) \left[ \frac{d_{c_i} + d_{c_j}}{d_{c_i} + d_{c_j} + 2g_{i,j}} + \frac{8\left(D_i + D_j\right)}{c_{i,j}\left(d_{c_i} + d_{c_j}\right)} \right]^{-1} \tag{11}$$

where $D_i$ is diffusion coefficient of an aggregate in section $i$, $g_{i,j}$ is transition parameter and $c_{i,j}$ is average particle velocity .

The collision diameter of an aggregate in section $i$, $d_{c_i}$ is given by (Matsoukas and Friedlander, 1996):

$$d_{c_i} = d_{p_i} \left( \frac{v_i}{v_{p_i}} \right)^{1/D_f} \tag{12}$$

where $D_f$ is mass fractal dimension of an aggregate, and $d_{pi}$ and $v_{pi}$ are diameter and volume, respectively, of a primary particle in an aggregate.

Particle population balance module (60) predicts the complete particle size distribution of the particles on the basis of the above discussed equations.

Particle population balance module (60) is further coupled to precursor kinetics reaction module (70) which provides the rate kinetics of the precursor oxidation reaction to the population balance module.

The combined eddy dissipation - finite rate chemistry model available in CFX 11.0 is used to capture the oxidation of precursor to product molecules. The rate of oxidation is taken as the minimum of the rates obtained using the Arrhenius expression, given below, and the eddy dissipation model (Eqs. 7 and 8).

$$R_A = A \exp\left( \frac{-E}{RT} \right) C_{precursor} \, C_{O_2} \tag{21}$$

where A is pre-exponential factor, E (J/kmol-K) is activation energy, $C_{precursor}$(kmol/m³) is the concentration of the precursor, $C_{O_2}$ (kmol/m³) is concentration of oxygen and $R$ (J.kmol⁻¹.K⁻¹) is the universal gas constant.

The particle population balance module accounts for the first order reaction of the precursor, coagulation and coalescence of the particles.

The particle population balance module is developed on a FORTRAN platform to simulate and predict the physical processes.

The values of variables such as but not limited to temperature, pressure, concentration of product obtained from numerical solver are fed to the particle population balance module developed on the FORTRAN platform.

Nanoparticles with desired particle size and shape are produced in the aerosol flame reactors on provision of the various optimized operating conditions such as but not limited to flame temperature, pressure, optimum gas flow rate, and reactant or precursor concentrations.

The values for various optimized operating conditions are fed to the simulation tool with the programmed instructions so as to simulate and determine the influence of these various operating parameters on the particle size distribution of the nanoparticles.

Further, according to another embodiment of the present invention, the geometry and design (20) of the reactor and burner also influences the particle size, particle size distribution and shape of the nanoparticles. The various sizes of burners, the number of concentric tubes of the burner, the spacing between each tube, diameter of the tubes of the burner are fed to the simulation tool with the programmed instructions so as to simulate and determine the influence of the furnace geometry and design of the burner and reactor on the particle size distribution of the nanoparticles.

Further according to one of the embodiments of the present invention, the burners are designed and configured for various stream inputs to the furnace reactor.

Further according to one of the embodiments of the present invention the burner geometry is designed and implemented in co-ordination with the simulation tool with programmed instructions in terms of number of concentric tubes, diameters of each tube, and spacing between each tube.

According to another embodiment of the present invention various physical constants, characteristics and properties of the materials (30) are fed to the simulation tool with the programmed instructions so as to simulate and determine the influence of the characteristics and properties of the material (30) on the particle size distribution of the nanoparticles.

The simulation tool with the programmed instructions provides output (80) as particle size distribution and specific surface area of the product powder.

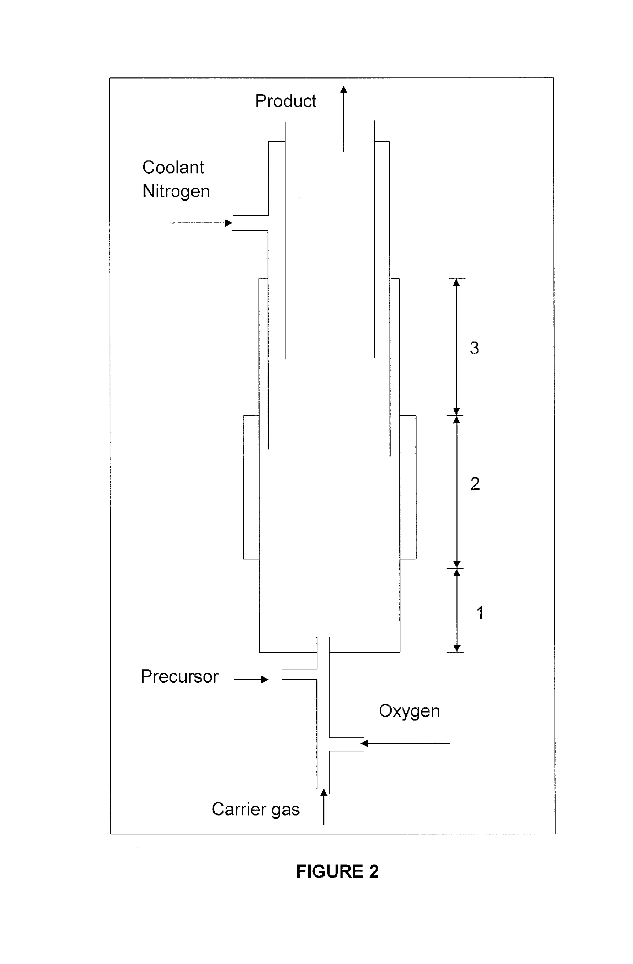

According to one of the embodiments of the present invention, Figure 2 illustrates a typical electrically heated furnace reactor configuration as described by Akhtar et al (1991).

According to Akhtar et al, cool nitrogen gas comes into the reactor from the outer annulus, mixes with the reactor effluents and the cooled gases exit the reactor through the inner tube. The primary dilutor quenches the reaction products and inhibits particle growth by sintering outside the reaction zone. In addition, it reduces thermophoretic losses from the product stream onto the cool dilutor walls.

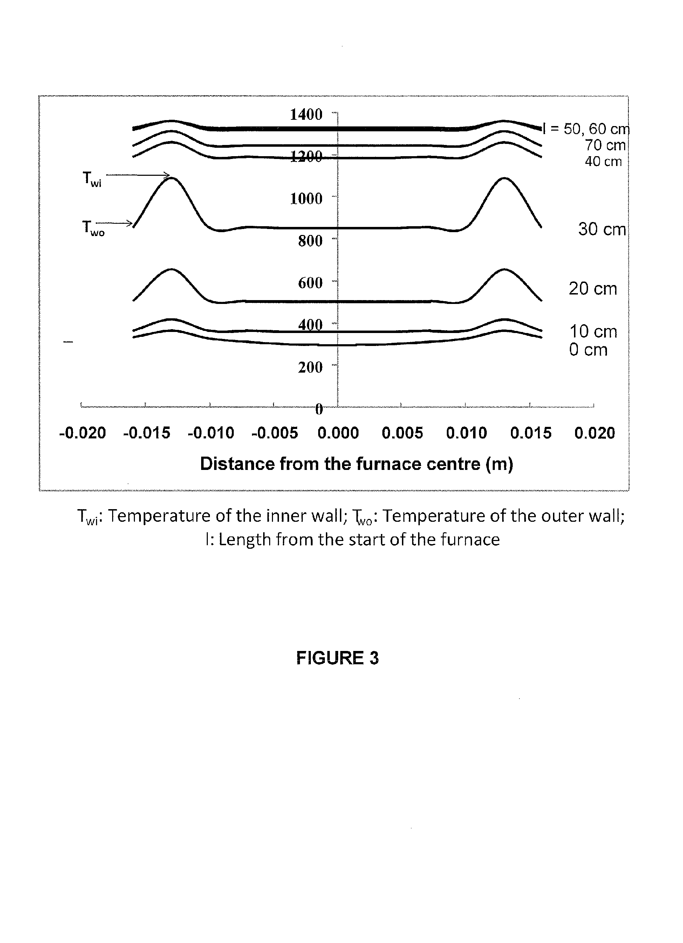

Figure 3 illustrates simulated temperature profile in the furnace reactor at a set furnace temperature of 1400 K.

As described in figure 2, the gas enters the reactor from the outer annulus at room temperature and is heated as it passes through the region where the heating elements of the furnace reactor are located. This hot gas after reaction is cooled by the incoming nitrogen gas from the top, and thereby cooling the gas towards the exit of the furnace.

## EXAMPLES OF WORKING OF THE INVENTION

The invention is described in the examples given below which is provided only to illustrate the invention and therefore should not be construed to limit the scope of the invention.

## EXAMPLE 1:

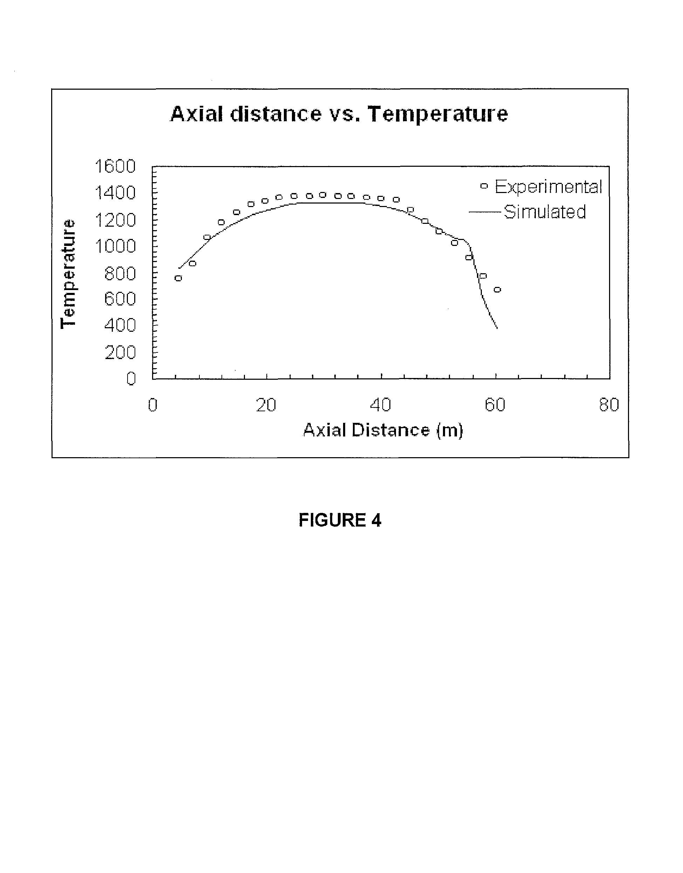

Figure 4 illustrates the comparison of axial temperature profile in a furnace reactor determined by simulation tool of the present invention with experimental data of Akhtar et al (1991), at a set furnace temperature of 1400 K.

According to one of the exemplary embodiments of the present invention, the simulation tool of the present invention was tested to compare axial temperature profile in a furnace reactor. The temperature profile determined by the simulation tool of the present invention is compared to the temperature profile obtained experimentally. The experimental data of Akhtar et al (1991) was used to compare the temperature profile determined by the simulation tool of present invention.

Further, Table 1 below provides and compares the simulated data determined by the simulation tool with programmed instructions for the axial temperature profile in a furnace reactor with that of published experimental data of Akhtar et al (1991).

It can be observed from figure 4 that the trend determined by the simulation tool of the present invention is in close agreement with the experimental measurements, further indicating the accuracy of the determinations made by the simulation tool of the present invention.

**Table 1:**

| Distance above burner outlet (m) | Temperature (K) | |
| --- | --- | --- |
| | Experimental | Simulated |
| 0.04 | 751 | 828 |
| 0.07 | 868 | 934 |
| 0.09 | 1057 | 1033 |
| 0.12 | 1174 | 1110 |
| 0.14 | 1247 | 1179 |
| 0.17 | 1304 | 1228 |
| 0.19 | 1332 | 1267 |
| 0.22 | 1360 | 1296 |
| 0.24 | 1366 | 1314 |
| 0.27 | 1366 | 1325 |
| 0.29 | 1375 | 1329 |

(continued)

| Distance above burner outlet (m) | Temperature (K) | |
|---|---|---|
| | Experimental | Simulated |
| 0.32 | 1373 | 1329 |
| 0.34 | 1366 | 1325 |
| 0.37 | 1358 | 1314 |
| 0.4 | 1351 | 1299 |
| 0.42 | 1341 | 1272 |
| 0.45 | 1268 | 1236 |
| 0.47 | 1177 | 1181 |
| 0.5 | 1106 | 1123 |
| 0.52 | 1017 | 1062 |
| 0.55 | 906 | 1009 |
| 0.58 | 770 | 597 |
| 0.6 | 666 | 372 |

## EXAMPLE 2:

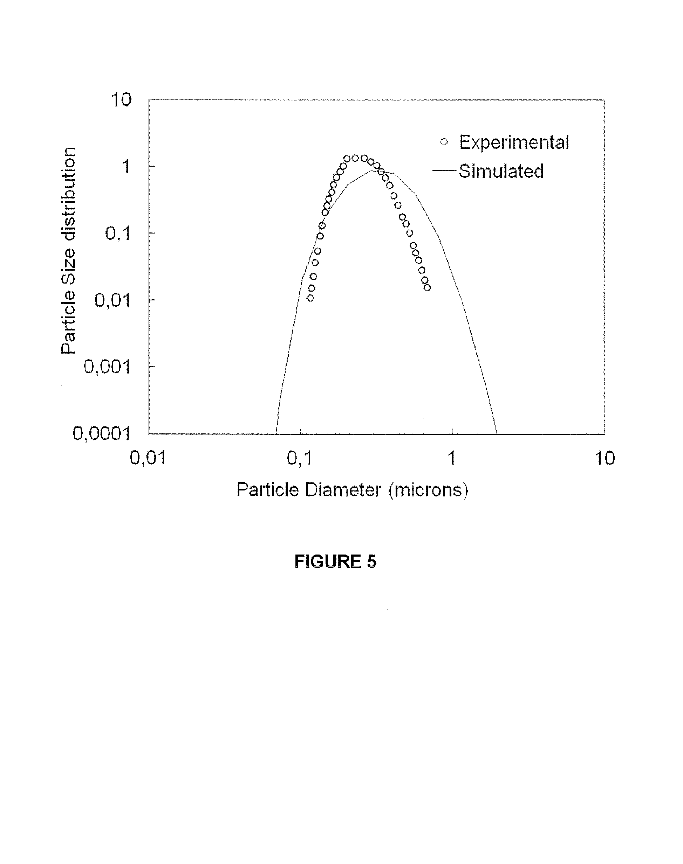

Figure 5 illustrates the comparison of titanium dioxide particle size distribution curves obtained using a precursor (TiCl$_4$) concentration of 1.16 $\times$ 10$^{-5}$ mol/l in at a furnace temperature of 1723 K determined by simulation tool of the present invention with experimental data of Akhtar et al (1991).

According to one of the exemplary embodiments of the present invention, the simulation tool of the present invention was tested for determination of titanium dioxide particle size distribution curves for TiCl$_4$ concentration of 1.16 $\times$ 10$^{-5}$ mol/l at a set furnace temperature of 1723 K.

Further, Table 2 (a) and 2(b) below provides and compares the simulated data determined by the simulation tool with programmed instructions with that of published experimental data of Akhtar et al (1991) simultaneously for titanium dioxide particle size distribution curves for TiCl$_4$ concentration of 1.16 $\times$ 10$^{-5}$ mol/l in at a furnace temperature of 1723 K.

**Table 2 (a)**

| Particle Size ($\mu$m) | Normalized Particle Number Concentration |
|---|---|
| 0.1163 | 0.0107 |
| 0.1182 | 0.015 |
| 0.1219 | 0.0228 |
| 0.125 | 0.0362 |
| 0.1296 | 0.055 |
| 0.1351 | 0.0908 |
| 0.1386 | 0.1323 |
| 0.1452 | 0.2051 |
| 0.1497 | 0.2582 |
| 0.1536 | 0.3249 |
| 0.1609 | 0.4175 |
| 0.1651 | 0.5365 |
| 0.1729 | 0.6894 |

(continued)

| Particle Size (μm) | Normalized Particle Number Concentration |
|---|---|
| 0.1821 | 0.832 |
| 0.1917 | 1.0253 |
| 0.2018 | 1.3175 |
| 0.2295 | 1.3454 |
| 0.2624 | 1.3454 |
| 0.2908 | 1.1868 |
| 0.319 | 1.047 |
| 0.3394 | 0.832 |
| 0.3628 | 0.6751 |
| 0.386 | 0.5254 |
| 0.4127 | 0.3683 |
| 0.4389 | 0.2636 |
| 0.4717 | 0.1772 |
| 0.4941 | 0.1408 |
| 0.5256 | 0.1008 |
| 0.5562 | 0.0663 |
| 0.5766 | 0.0516 |
| 0.6008 | 0.0393 |
| 0.6325 | 0.0281 |
| 0.6591 | 0.0201 |
| 0.6868 | 0.0153 |

**Table** 2 **(b)**

| Particle Size (μm) | Normalized Particle Number Concentration |
|---|---|
| 0.0512 | 0 |
| 0.0724 | 0.0003 |
| 0.1024 | 0.0201 |
| 0.1448 | 0.1778 |
| 0.2048 | 0.5428 |
| 0.2896 | 0.8746 |
| 0.4096 | 0.7953 |
| 0.5793 | 0.3774 |
| 0.8192 | 0.0868 |
| 1.1585 | 0.0097 |
| 1.6384 | 0.0006 |
| 2.317 | 0 |

It can be observed from figure 5 that the trend determined by the simulation tool of the present invention is in close agreement with the experimental measurements, further indicating the accuracy of the determinations made by the simulation tool of the present invention.

### EXAMPLE 3:

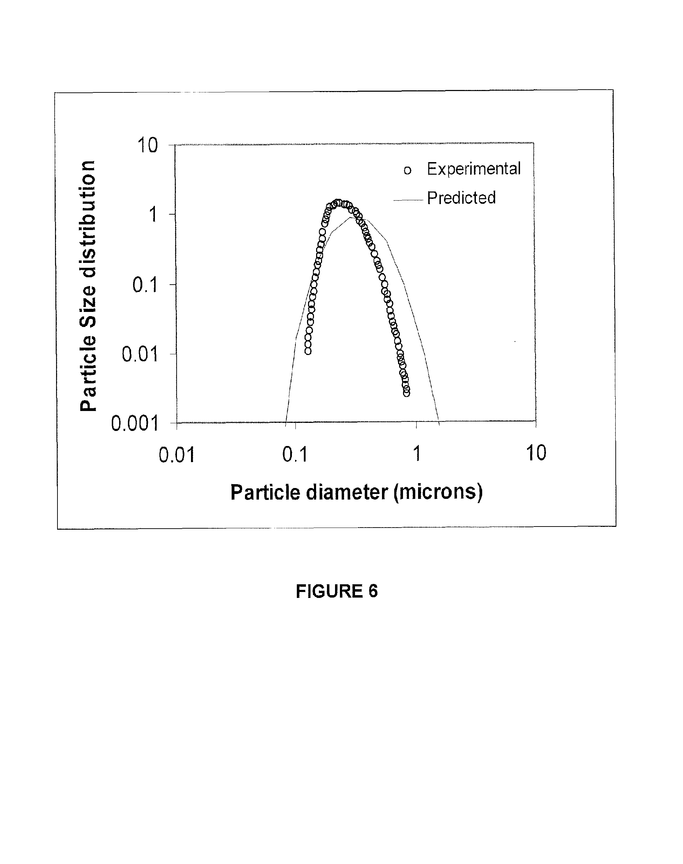

Figure 6 illustrates the comparison of titanium particle size distribution curves for $TiCl_4$ concentration of 1.56 X $10^{-5}$ mol/l at a furnace temperature of 1400 K determined by simulation tool of the present invention with the experimental data of Akhtar et al (1991).

According to one of the exemplary embodiments of the present invention, the simulation tool of the present invention was tested further for prediction of titanium particle size distribution curves for $TiCl_4$ concentration of 1.56 X $10^{-5}$ mol/l in a furnace temperature of 1400 K.

Further, Table 3 (a) and 3(b) below provides and compares the simulated data determined by the simulation tool with programmed instructions with that of published experimental data of Akhtar et al (1991) simultaneously for titanium dioxide particle size distribution curves for $TiCl_4$ concentration of 1.56 $\times$ $10^{-5}$ mol/l in at a furnace temperature of 1400 K.

**Table 3 (a)**

| Particle Size ($\mu$m) | Normalized Particle Number Concentration |
|---|---|
| 0.128 | 0.0104 |
| 0.1327 | 0.0205 |
| 0.1421 | 0.0617 |
| 0.157 | 0.1767 |
| 0.1595 | 0.2064 |
| 0.1629 | 0.2495 |
| 0.1725 | 0.5237 |
| 0.1857 | 0.8201 |
| 0.1957 | 1.0622 |
| 0.2117 | 1.2841 |
| 0.2915 | 1.2622 |
| 0.3072 | 1.0995 |
| 0.4057 | 0.4642 |
| 0.4674 | 0.2538 |
| 0.5057 | 0.1767 |
| 0.5616 | 0.0933 |
| 0.6205 | 0.0493 |
| 0.6608 | 0.0274 |
| 0.7037 | 0.0178 |
| 0.7613 | 0.0081 |
| 0.815 | 0.0046 |
| 0.8544 | 0.0025 |

**Table 3 (b)**

| Particle Size ($\mu$m) | Normalized Particle Number Concentration |
|---|---|
| 0.0512 | 0 |

(continued)

| Particle Size (μm) | Normalized Particle Number Concentration |
|---|---|
| 0.0724 | 0.0002 |
| 0.1024 | 0.0165 |
| 0.1448 | 0.1624 |
| 0.2048 | 0.5232 |
| 0.2896 | 0.8695 |
| 0.4096 | 0.8111 |
| 0.5793 | 0.3966 |
| 0.8192 | 0.0944 |
| 1.1585 | 0.0109 |
| 1.6384 | 0.0007 |

Further, it can be observed from figure 6 that the trend determined by the simulation tool of the present invention is in close agreement with the experimental measurements, further indicating the accuracy of the determinations made by the simulation tool of the present invention.

## ADVANTAGES OF THE INVENTION:

- Provides a system and method for optimizing and controlling the complete particle size distribution of nanoparticles in a furnace reactor.
- Provides a system and method that predicts the effect of the burner geometry and design and the process operating conditions on the particle size distribution.
- Provides cost effective and time saving method and system for optimizing and controlling the particle size distribution and of production of nanoparticles in a furnace reactor.
- Reduces the number of trials or experiments to be conducted for determining the optimum process conditions and burner design and geometry to obtain desired particle characteristics, if not avoidable completely.
- Provides details about the internal condition of the process equipment and insight into the phenomena that occur during the process.

## Claims

1. A system for optimizing and controlling particle size distribution and production of nanoparticles in a furnace reactor comprising of:

    a furnace reactor integrated with process instruments; wherein the said reactor further comprises of:

    at least one burner;
    at least one precursor or reactant;
    at least one coolant stream;
    at least one stream input with at least one precursor or reactant; and
    optionally an electric heater

    a simulation tool with programmed instructions to cause the processor to couple flame dynamics module, numerical solver and particle population balance module in order to optimize and control the particle size distribution and production of nanoparticles in the furnace reactor.

2. A system as claimed in claim 1, wherein the process instruments integrated with the furnace reactor comprises of precursor flow rate gauze, precursor flow rate pressure gauze, air flow rate gauze , air flow pressure gauze, carrier gas flow rate gauze, carrier gas flow pressure gauze, coolant flow rate gauze, coolant pressure gauze and coolant flow rate gauze.

3. A system as claimed in claim 1, the process instruments integrated with the furnace reactor provides the operating data for variables such as precursor flow rate, precursor pressure, air flow rate , air pressure, carrier gas flow rate, carrier gas pressure and coolant flow rate to the simulation tool with programmed instructions to manage the nanoparticle production process.

4. A system as claimed in claim 1, wherein the electric heater further provides an entry and exit point for coolant.

5. A system as claimed in claim 1, wherein the said flame dynamics module determines the flame temperature and different species mass-fractions throughout the furnace reactor.

6. A system as claimed in claim 1, wherein the said particle population balance module determines the particle size distribution of the evolved nanoparticles.

7. A system as claimed in claim 1, wherein the said flame dynamics module determines and simulates the physical processes comprising fluid flow, heat transfer, chemical reactions and particle nucleation and growth.

8. A system as claimed in claim 1, wherein the said particle population balance module is coupled with precursor reaction kinetics module for monitoring and controlling the particle size distribution of nanoparticles.

9. A system as claimed in claim 1, wherein the said numerical solver manages the operating data obtained from flame dynamics module.

10. A system as claimed in claim 1, wherein the said simulation tool for particle population dynamics with programmed instructions is developed on a FORTRAN platform to simulate and determine the physical processes.

11. A system as claimed in claim 1, wherein the simulation tool with programmed instructions controls the burner ignition and thereby controlling the flame in the furnace reactor.

12. A system as claimed in claim 1, wherein the burners are designed and configured for various stream inputs fed along with precursor or reactant to the furnace reactor.

13. A system as claimed in claim 1, wherein the burner geometry is designed and implemented in co-ordination with the simulation tool with programmed instructions for number of concentric tubes each with at least 1-25 mm diameter further having at least 1 mm spacing between each such tube.

14. A system as claimed in claim 1, wherein the said precursor or reactant comprises of materials such as titanium tetrachloride, silicon tetrachloride and acetylene either in liquid or vapor form.

15. A method for simulating the production of nanoparticles in a furnace reactor comprises of:

    a) Determining

        i) the operating data for physical process parameters from the said process instruments integrated with the furnace reactor;
        ii) the mixing characteristics of the precursor or reactant at a particular concentration and the stream input fed to the burner of the said furnace reactor;
        iii) the data for burner configuration and the design of the reactor;

    b) Feeding the determined data of step a) to the flame dynamics module of the simulation tool with the programmed instructions to obtain the flame temperature and different species mass-fractions throughout said furnace reactor;
    c) Transmitting the determined data of step a) and b) to the numerical solver by the flame dynamics module of the said simulation tool for providing inputs to the particle population balance model and managing the obtained data;
    d) Transmitting the flame dynamics results from step c) to particle population balance module and the precursor reaction kinetics module (to estimate the rate kinetics of the precursor oxidation reaction simultaneously) coupled to the said particle population balance module of the said simulation tool to determine the particle size distribution of the evolved nanoparticles; and

e) Obtaining the output as product particle size distribution and specific surface area of the product powder from the simulation tool with the programmed instructions to optimize and control the particle size distribution and nanoparticle production in a furnace reactor integrated with the process instruments.

**FIGURE 1**

**FIGURE 2**

$T_{wi}$: Temperature of the inner wall; $T_{wo}$: Temperature of the outer wall;
l: Length from the start of the furnace

FIGURE 3

FIGURE 4

**FIGURE 5**

FIGURE 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060159596 A

**Non-patent literature cited in the description**

- **AKHTAR, M.K. ; XIONG, Y. ; PRATSINIS, S.E.** Vapor Synthesis of Titania Powder by Titanium Tetrachloride Oxidation. *AlChE J.,* 1991, vol. 37, 1561-1570